# EUROPEAN PATENT SPECIFICATION

(11) **EP 1 791 073 B1**
(45) Date of publication and mention of the grant of the patent: **23.01.2013**
(21) Application number: 06018117.9
(22) Date of filing: 30.08.2006
(51) Int. Cl.: G06F 21/30

(54) **Processing device, helper data generating device, terminal device, authentication device and biometrics authentication system**
Verarbeitungsvorrichtung, Vorrichtung zur Generierung von Helferdaten, Endgerät, Authentifizierungsvorrichtung und biometrisches Authentifizierungssystem
Dispositif de traitement, dispositif de génération de données d'aide, dispositif terminal, dispositif d'authentification et système d'authentification biométrique

(30) Priority: 24.11.2005 JP 2005337998
(43) Date of publication of application: 30.05.2007
(73) Proprietor: HITACHI, LTD., Chiyoda-ku Tokyo 100-8280 (JP)
(72) Inventor: Takahashi, Kenta, Chiyoda-ku, Tokyo 100-8220 (JP); Mimura, Masahiro, Chiyoda-ku, Tokyo 100-8220 (JP)
(74) Representative: Strehl Schübel-Hopf & Partner

(56) References cited:
- WO-A2-2004/104899
- US-A1- 2005 135 661
- PIM TUYLS ET AL: "Practical Biometric Authentication with Template Protection" LECTURE NOTES IN COMPUTER SCIENCE, SPRINGER VERLAG, BERLIN, DE, vol. 3546, 30 June 2005 (2005-06-30), pages 436-446, XP019013299 ISSN: 0302-9743

## Description

### BACKGROUND OF THE INVENTION

The present invention relates to a device, a method, and a program for authenticating and identifying an individual, using the biometric characteristics of a human being.

A user authentication system based on biometric information acquires biometric information from a user at registration time and extracts information, called a feature vector, for registration. This registration information is called a template. At authentication, the system acquires biometric information from the user again, extracts feature vector, and compares the acquired information with the template to identify whether the user is authentic. A point to consider here is that biometric information or a feature vector extracted therefrom is personal information by which individuals can be identified and, when this information is registered in the system, a management cost problem or a privacy problem arises. Another problem is that, when a template is registered in multiple applications, all applications are exposed to the danger of impersonation if a template is leaked from one of the applications.

To solve this problem, a method is proposed for dynamically generating a password (or a private key) from biometric information at authentication time for use in authentication. For example, "A challenge - response authentication with a password extracted from a fingerprint", by Yoichi Shibata et al., IPSJ(Information processing society of Japan) Study Report, Vol.2004, No.75,2004 proposes a method in which, with the hash value of a user password registered in an authentication server in advance, a client acquires user's biometric information at authentication time to generate a password from the biometric information and sends the hash value to the authentication server to allow the authentication server to compare the received hash value with the previously registered hash value to authenticate the user. "Mechanism-based PKI - A Real-time Key Generation from Fingerprints", by Yoichi Shibata, et al., IPSJ Journal Vol. 45, No. 8,2004 proposes a method in which a PKI private key is generated from biometric information at authentication time to allow the authentication server to authenticate a client user using a public key certificate created for this private key in advance.

In general, each time digital data on biometric information is acquired, its value varies even if the biometric information is acquired from the same living body because of a change across ages, a positional misalignment, a distortion, and an environmental noise. For this reason, to generate a password or a private key from biometric information, it is necessary to stably quantize the biometric information. A method of stably quantizing biometric information is disclosed, for example, in U.S. Patent publication No. 2005/135661 ( JP-A-2005-122522 ). The methods of quantizing biometric information for generating a predetermined code (password or private key), including the method disclosed in U.S. Patent publication No. 2005/135661 , usually create helper data based on the biometric information and a predetermined code in advance and, during code generation, use the created helper data.

The method proposed in " A challenge - response authentication with a password extracted from a fingerprint", by Yoichi Shibata et al., IPSJ Study Report, Vol.2004, No.75,2004 , requires a user to create helper data for each password if the user registers different passwords in the authentication servers of multiple applications. Biometric information on a user must be acquired to create helper data and, in this case, there is a possibility that an unauthorized user impersonates a legitimate user. To prevent this impersonation, an operator must usually identify a user using his/her ID card at registration time, and this identification process generates a management cost problem. On the other hand, a user also feels inconvenience because the user is checked for identification each time the user registers himself/herself in an application.

The method proposed in " Mechanism-based PKI - A Real-time Key Generation from Fingerprints", by Yoichi Shibata, et al., IPSJ Journal Vol.45, No.8,2004 establishes a one-to-one correspondence between helper data and PKI private keys. So, if there is a possibility that one of helper data and a private key is leaked, both must be updated at the same time. As described above, because the update of helper data usually involves checking for user identification and the update of a privacy key requires the certificate authority to re-issue the corresponding public key. This process increases the management cost and decreases convenience.

WO 2004/104899 A2 describes a system for authenticating a physical object which has the features included in the first part of claim 1. In the system disclosed in this document and, similarly, in that described by Pim Tuyls, et al. in the paper "Practical Biometric Authentication with Template Protection", Lecture Notes in Computer Science, Springer-Verlag, Berlin, DE, vol. 3546, 30 June 2005, pp 436-446, data are created as a basis for helper data, a subset is selected therefrom to create the helper data, and different helper data are created for different applications.

### SUMMARY OF THE INVENTION

It is an object of the invention to provide an authentication system that requires a lower operation cost and reduces the user load.

This object is met by the invention defined in the independent claims.

When helper data is generated for generating a password (for example, an authentication password) used to authenticate a user (for example, to verify whether the user is authentic) based on the user's biometric information, master helper data, created in advance based on the user's biometric information, are converted to generate helper data corresponding to the password.

Preferably, a user's medium (for example, an IC card) has this function. A terminal into which the user's medium is inserted generates a password and sends the password to an authentication device to allow the authentication device to authenticate the user with the password.

Preferably, the master helper data has a value for each distribution interval of the user's biometric information, a partial value of the password is assigned to a distribution interval whose master helper data value corresponds to a first value (for example, "1"), other values (for example, random numbers) are assigned to the distribution intervals of the user's biometric information whose master helper data value corresponds to a second value (for example, "0"), and the assigned values are combined to generate helper data.

Preferably, a value corresponding to a frequency-concentrated distribution interval in the master helper data is the first value, and a value corresponding to the distribution intervals other than the frequency-concentrated distribution interval is the second value.

When the user registers a password for an application, master helper data, created in advance, are converted to generate helper data corresponding to the password. Therefore, there is no need for acquiring new biometric information and re-creating helper data even when different passwords are registered for multiple applications or when a once-registered password is changed. When re-creating helper data from biometric information, the user must be identified to prevent impersonation. In contrast, the device according to the present system requires user identification only when master helper data is created but not when a password is registered for an application or a password is updated, thus reducing the operation cost and the user load.

The present system increases security and privacy protection because a correct password or original biometric information cannot be easily estimated even when helper data is leaked.

In addition, the present system allows networked biometric authentication to be performed without creating a PKI private key directly from master helper data, thereby eliminating the need for issuing a certificate and creating helper data at the same time. So, as compared with the method described in " Mechanism-based PKI - A Real-time Key Generation from Fingerprints", by Yoichi Shibata, et al., IPSJ Journal Vol. 45 No. 8,2004 , the present system requires a lower operation cost and a lighter user load.

Other objects, features and advantages of the invention will become apparent from the following description of the embodiments of the invention taken in conjunction with the accompanying drawings.

### BRIEF DESCRIPTION OF THE DRAWINGS

FIG. 1 is a block diagram showing the functional configuration of a first embodiment of the present invention.
FIG. 2 is a flowchart showing master helper data registration processing in the first embodiment of the present invention.
FIG. 3 is a flowchart showing password registration processing in the first embodiment of the present invention.
FIG. 4 is a flowchart showing authentication processing in the first embodiment of the present invention.
FIG. 5 is a diagram showing password generation processing in the first embodiment of the present invention.
FIG. 6 is a diagram showing master helper data creation processing in the first embodiment of the present invention.
FIG. 7 is a diagram showing helper data conversion processing in the first embodiment of the present invention.
FIG. 8 is a block diagram showing the hardware configuration of the first embodiment of the present invention.
FIG. 9 is a block diagram showing the functional configuration of a second embodiment of the present invention.
FIG. 10 is a flowchart showing certificate issuance processing in the second embodiment of the present invention.
FIG. 11 is a flowchart showing authentication processing in the second embodiment of the present invention.
FIG. 12 is a block diagram showing the functional configuration of a third embodiment of the present invention.
FIG. 13 is a flowchart showing authentication processing in the third embodiment of the present invention.

### DETAILED DESCRIPTION OF THE EMBODIMENTS

### [First embodiment]

The following describes a first embodiment of the present invention using an example of a server/client type biometric authentication system that can register and authenticate a biometric-information-based password for multiple networked service applications.

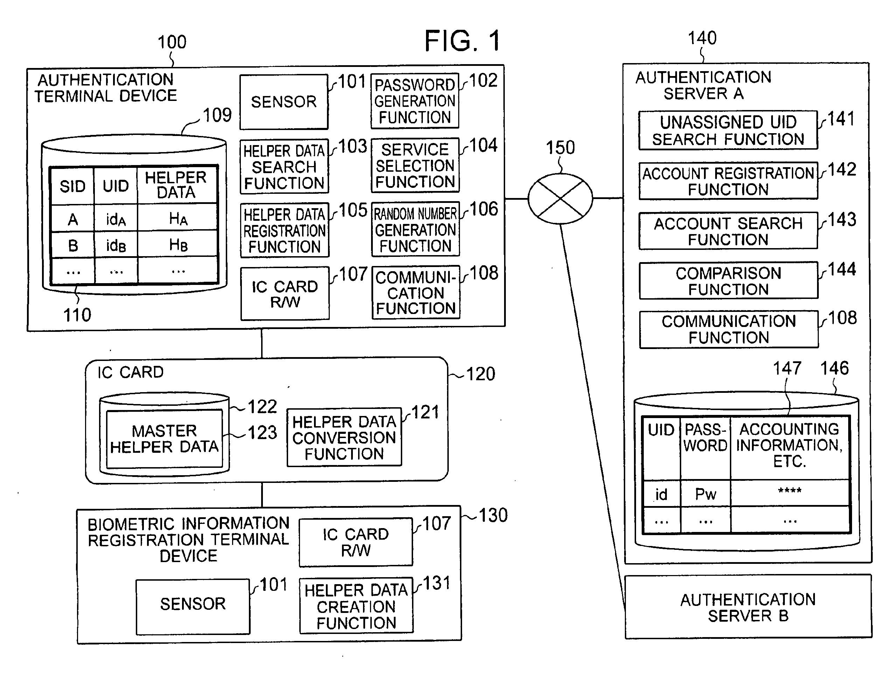

FIG. 1 is a diagram showing the configuration of a system in this embodiment. A biometric authentication system in this embodiment comprises an authentication terminal device 100 by which the user is authenticated when the user receives services via a network; an IC card 120 issued to the user; a biometric information registration terminal device 130 used to register master helper data into an IC card; an authentication server 140 used by a service application to authenticate the user; and a network 150. The authentication terminal device 100, which may also be a user's PC, a mobile phone, or a PDA, is connected to the authentication server 140 via the network 150. The biometric information registration terminal device 130 is managed by an authority (hereinafter called a biometrics registration authority) that provides master helper data registration service to the user. The biometrics registration authority identifies the user appropriately based on the user's ID card, creates master helper data from the user's biometric information, and registers the created master helper data into the IC card 120. A service application trusts the master helper data registered and issued by the biometrics registration authority. The biometrics registration authority is, for example, a bank, in which case, the service application is a net banking service or an online credit settlement service. In response to an authentication request from the authentication terminal device 100, the authentication server 140, managed by a service provider, checks if a legitimate user is on the authentication terminal device and determines whether to provide services.

The authentication terminal device 100 comprises a sensor 101 that acquires biometric information (for example, fingerprint image) from a user's living body (for example, fingerprint); a password generation function 102 that generates an authentication password from biometric information and helper data; a helper data search function 103 that searches a helper data database 109 for helper data; a service selection function 104 that selects a service to be used by the user; a helper data registration function 105 that registers helper data into the helper data database 109; a random number generation function 106; an IC card R/W (Reader/Writer) 107 that reads data from, or writes data into, the IC card 120; a communication function 108 that communicates with the authentication server 140; and the helper data database 109 that records and manages helper data. The helper data database 109 records a helper data record 110 for each service application. The helper data record 110 includes a service identifier (SID) for identifying a service application, a user identifier (UID) of the user of the service application, and helper data on the service application. If the generation of an authentication password does not depend on a service application, the authentication terminal device 100 need not have the helper data database 109. That is, each time an authentication request is issued to the authentication server 140, the authentication terminal device 100 may receive helper data from the IC card 120 to generate an authentication password.

The IC card 120 comprises a helper data conversion function 121 that creates helper data, corresponding to a predetermined registration password, from master helper data 123; and a storage device 122 that stores the master helper data 123. Instead of an IC card, some other device having the data recording function and the processing function, such as a USB (Universal Serial Bus) memory card or a mobile terminal device, may also be used.

The biometric information registration terminal device 130 comprises a sensor 101, an IC card R/W (Reader/Writer) 107, and a helper data creation function 131 that creates master helper data from biometric information. The biometric information registration terminal device 130 creates master helper data. The authentication terminal device 100 and the biometric information registration terminal device 130 may also be integrated into one device.

The authentication server 140 comprises an unassigned UID search function 141 that searches for an unassigned user identifier when the account of a new user is registered, an account registration function 142, an account search function 143, a checking function 144 that checks a password; a communication function 108; and an account database 146 that records and manages the user accounts. The account database 146 records an account record 147 for each registered user. The account record 147 includes a user identifier (UID), the registration password of the user, and the accounting information (for example, credit card number).

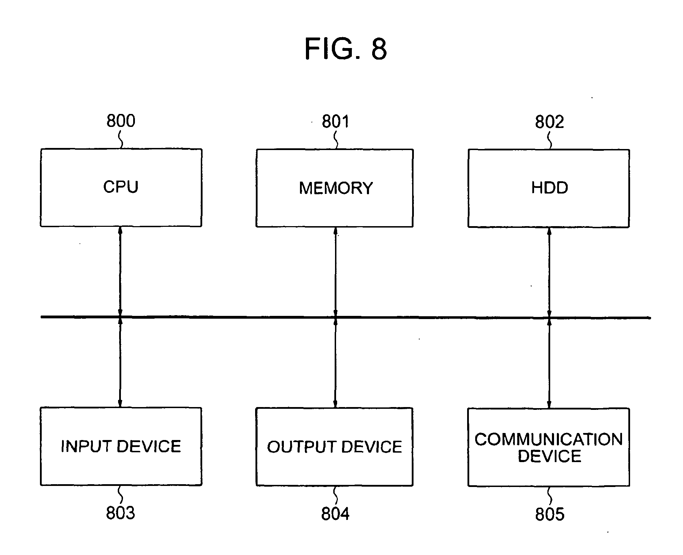

As shown in FIG. 8, the authentication terminal device 100, biometric information registration terminal device 130, and authentication server 140 can be implemented by a computer system, such as a personal computer or a workstation, comprising a CPU 800, a memory 801, an HDD (hard disk device) 802, an input device (keyboard, mouse, etc.) 803, an output device (display, printer, etc.) 804, and a communication device 805. The functional units 102-106 of the authentication terminal device 100, the functional unit 131 of the biometric information registration terminal device 130, and the functional units 141-144 of the authentication server 140 are implemented by executing the programs, loaded into the memory 801, by the CPU 800. The memory 801 and the HDD 802 are used as the helper data database 109 of the authentication terminal device 100 and the account database 146 of the authentication server 140.

The following describes the processing performed when master helper data is registered, a password is registered, and the user is authenticated.

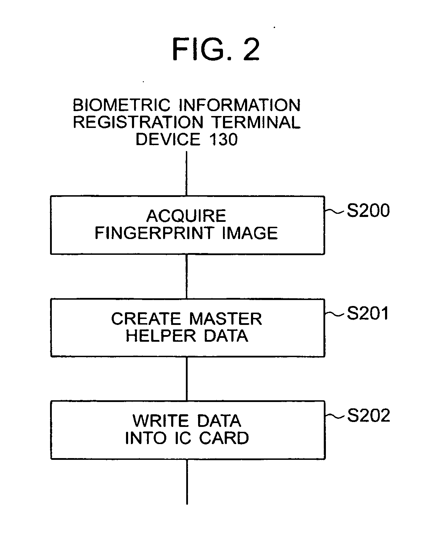

FIG. 2 is a flowchart showing the processing performed when master helper data is registered. The operator of the biometrics registration authority first identifies a user using the ID card and then operates the biometric information registration terminal device 130 to start the processing of this flowchart.

First, the sensor 101 of the biometric information registration terminal device 130 reads the user's fingerprint to create a fingerprint image (Step S200).

Next, the helper data creation function 131 creates the master helper data 123 from the fingerprint image (Step S201). An example of creating master helper data from a fingerprint image will be described later.

Next, the IC card R/W 107 writes the master helper data 123 into the storage device 122 of the IC card 120 (Step S202).

The master helper data registration processing described above is required to be executed in advance only once regardless of the number of service applications to be registered by the user. That is, the master helper data is common to multiple service applications.

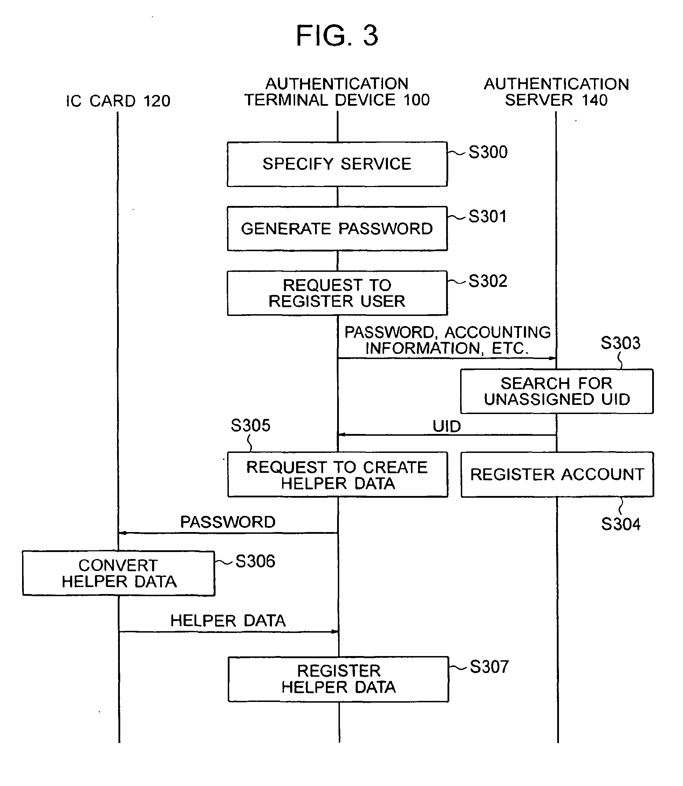

FIG. 3 is a flowchart showing the processing performed when a password is registered. When a user registration request for a service application is received from the user, the authentication terminal device 100 starts the processing of this flowchart.

First, the service selection function 104 of the authentication terminal device 100 checks the user's instruction to determine for which service application the user is to be registered (Step S300).

Next, the random number generation function 106 (registration password generation function) randomly creates a registration password of an appropriate length (bit string) (Step S301).

Next, the communication function 108 sends the registration password and the user's account information to the authentication server 140 of the service application via the network 150 to make a user registration request (Step S302).

The authentication server 140 receives the registration password and the accounting information, and the unassigned UID search function 141 searches for an unassigned user identifier and sends the user identifier to the authentication terminal device 100 via the communication function 108 (Step S303).

Next, the account registration function 142 creates the account record 147, which includes the user identifier, the registration password, and the accounting information, and registers the created record in the account database 146 (Step S304).

The authentication terminal device 100 receives the user identifier and, via the IC card R/W 107 (communication function), sends the registration password to the IC card 120 to make a helper data creation request (Step S305).

The helper data conversion function 121 of the IC card 120 receives the registration password, creates helper data corresponding to the registration password by converting master helper data 123, and sends the created helper data to the authentication terminal device 100 (Step S306). An example of helper data conversion processing will be described later.

The authentication terminal device 100 receives the helper data, and the helper data registration function 105 creates the helper data record 110, including the service application identifier (SID), the user identifier, and the helper data, and records the created record in the helper data database (Step S307).

As described above, when the user wants to register for a service application, the user need not perform the biometric information registration procedure which involves user identification processing; instead, the user is required only to present the IC card 120 to the authentication terminal device 100 and specify the service application for which the user wants to register. Therefore, when the user registers for multiple service applications, the biometric authentication system in this embodiment is more convenient to the user than the conventional system.

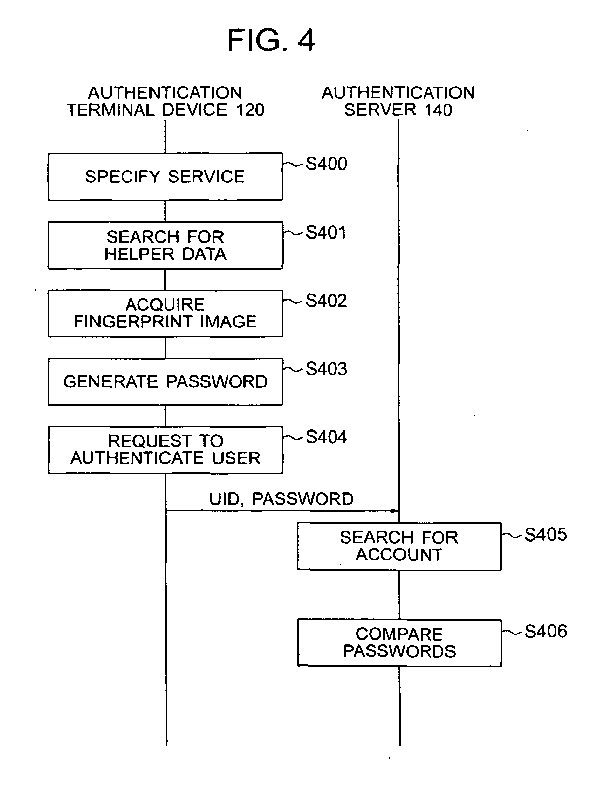

FIG. 4 is a flowchart showing the processing performed when a user is authenticated. The authentication terminal device 100 starts the processing of this flow when a service usage request is received from the user.

First, the service selection function 104 of the authentication terminal device 100 checks the user's instruction to determine which service application the user wants to use (Step S400).

Next, the helper data search function 103 searches the helper data database 109 for the helper data record 110 with the service identifier (SID), determined in Step S400, as the search key (Step S401).

Next, the sensor 101 of the authentication terminal device 100 reads the user's fingerprint and creates a fingerprint image (Step S402).

Next, the password generation function 102 generates an authentication password from the fingerprint image and the helper data included in the helper data record 110 (Step S403). An example of authentication password generation processing will be described later.

Next, the communication function 108 sends the user identifier, included in the helper data record 110, and the authentication password to the authentication server 140 to make an authentication request (Step S404). Instead of the authentication password, the hash value or encrypted data of the authentication password may also be sent.

The authentication server 140 receives the user identifier and the authentication password, and the account search function 143 searches the account database 146 for the account record 147 with the user identifier as the search key (Step S405).

The checking function 144 compares the registration password, included in the account record 147, with the authentication password and, if they match, determines that the authentication is successful and, if they do not match, determines that the authentication is unsuccessful (Step S406). If the hash value or the encrypted data is received instead of the authentication password, the hash value or the encrypted data is created also for the registration password for use in comparison.

As described above, the biometrics registration authority, trusted by a service application, creates master helper data to eliminate the need for the service application to register the biometric information and to create the helper data on its own, thus reducing the operation cost.

Next, the following describes an exemplary method of password generation from biometric information based on the technology disclosed in U.S. Patent publication No. 2005/135661. Based on this example, the following also describes that master helper data can be created and helper data can be converted based on this example. The master helper data creation method and the helper data conversion method described below are applicable similarly to the technology for generating key information from biometric information disclosed in the specification and the drawings of Japanese Patent Application No. 2005-087808. In addition, though information on a fingerprint is used as an example of biometric information in the description below, the technology can also be embodied similarly in non-fingerprint biometric information such as information on a vein or an iris.

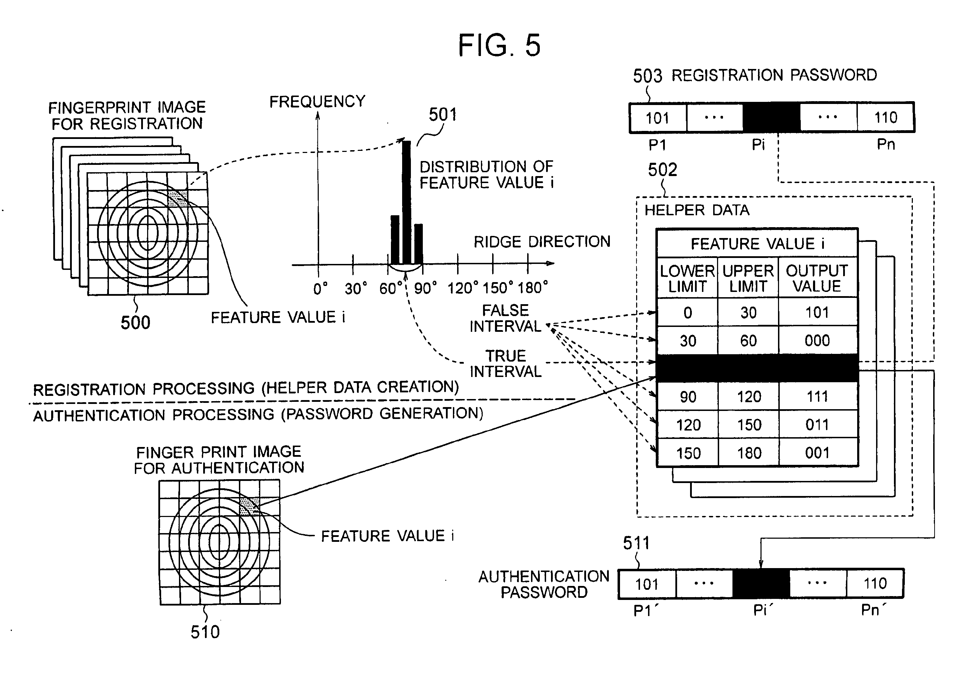

First, with reference to FIG. 5, the following describes the method of creating helper data, corresponding to a predetermined registration password, from a fingerprint image and generating an authentication password using the fingerprint image and the helper data at authentication time, based on the technology disclosed in U.S. Patent publication No. 2005/135661.

First, the following describes helper data creation processing at registration time.

First, a registration password 503 is divided into a specific number (for example, n) and the divided passwords are named P1, P2, ..., Pn beginning at the start.

Next, multiple registration fingerprint images are repeatedly acquired from a specific fingerprint (for example, index finger of right hand) of the user to create a fingerprint image set 500. Those registration fingerprint images are moved in parallel for correction, with a specific point in the fingerprint pattern (for example, center point of the fingerprint whorls) as the base point, so that the images overlap each other.

Next, the registration fingerprint image is divided into n blocks, and the direction of the ridges in each block is calculated. In general, it is enough to extract multiple feature values from the biometric information. For example, in the description below, the ridge direction in each block of the fingerprint image is used as one feature value.

Consider the directions of ridges in one block, for example, those in the i-th block (hereinafter called block i). Although the directions of ridges in block i (feature value i) in each registration fingerprint image should have the same value, the feature values i do not match completely in practice because of a distortion or rotation error generated when the finger is placed on the sensor and, instead, the values follow a distribution 501 with a relatively narrow breadth such as the one shown in the figure.

The true interval of the feature value i is determined so that the interval includes a large proportion of the distribution 501. For example, the true interval [µ-3σ, µ+3σ] may be used for the distribution 501 where µ is the average and σ is the standard deviation. For example, in the figure, it is assumed that the true interval of the ridge direction equal to or larger than 60° but smaller than 90° is acquired. It is also possible to define a threshold instead of a standard deviation and to determine that an interval with a higher frequency than that of the threshold is the true interval. The true interval should be an interval with a concentrated frequency.

Next, the whole interval of the feature values (the interval equal to or larger than 0° and smaller than 180° in the figure) is divided equally into the breadth of the true interval to generate multiple intervals. In the example in the figure, six intervals are generated. The intervals other than the true interval are called false intervals. The true interval may be multiple intervals (for example, two or three). The true interval and the false interval may also be exchanged.

A table (output value table of feature value i) is created, in which the true interval and the false intervals acquired for the feature value i as described above are arranged and, in this table, the ith divided password Pi is assigned to the true interval as its output value and random numbers, which are not Pi and different each other, are assigned to the false intervals. Such tables are created, one for each feature value i (i=0, 1, ... ,n), and are collected (combined) as helper data 502.

Next, the following describes the password generation processing when the user is authenticated.

First, an authentication fingerprint image 510 is acquired from the user's fingerprint and is divided into n blocks, and the direction (feature vector) of the ridges in each block is calculated.

By referencing the i-th table of helper data (output value table of feature value i) for each feature value i (i=0, 1, ..., n), the interval including the feature value i is searched for and an output value corresponding to the interval is obtained.

The output value obtained as a result of the search is the restored value Pi' of the divided password Pi. The data produced by arranging and concatenating those restored values is output as an authentication password 511. If the fingerprint at registration time and the fingerprint at authentication time are acquired from the same finger, the authentication password matches the registration password with a high probability.

An example of processing for generating a predetermined password from a fingerprint based on the technology disclosed in U.S. Patent publication No. 2005/135661 has been described.

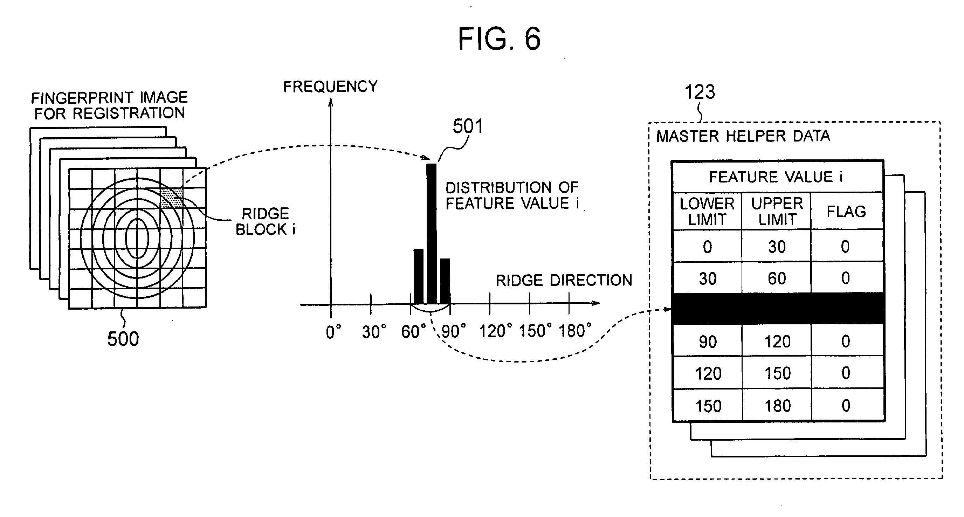

Next, with reference to FIG. 6, the following describes a method of creating master helper data, used in the present invention, based on the example of processing described above.

First, the same processing as the helper data creation processing at registration time in FIG. 5 is performed to calculate the true interval and the false intervals of each feature value i.

Next, a table (flag table of feature value i) is created in which the true interval and the false intervals are arranged and in which the flag 1 is assigned to the true interval and the flag 0 is assigned to the false intervals. Such tables are created for all feature values i (i=0, 1, ..., n), one for each, and are combined into the master helper data 123.

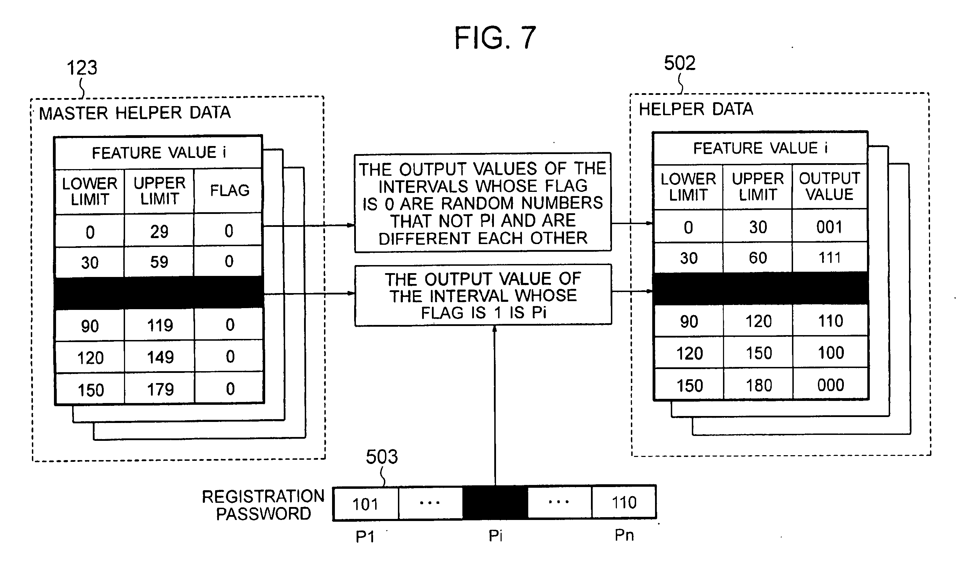

Next, with reference to FIG. 7, the following describes an example of helper data conversion processing of the present invention, that is, the processing for creating helper data, corresponding to a predetermined registration password, using master helper data and the predetermined registration password.

First, the registration password 503 is divided into n where n is the number of flag tables included in the master helper data 123. The divided passwords are named P1, P2, ..., Pn, beginning at the start.

For the i-th flag table (flag table of feature value i) of the master helper data 123, a table (output value table of feature value i) is created in which the output value of the flag-1 interval is set to Pi and the output values of the flag-0 intervals are set to random numbers which are not Pi and different each other. Such a table is created for all n flag tables that are combined into helper data 502.

The method described above is used to convert the master helper data 123 to produce the helper data 502 corresponding to the registration password 503. The conversion processing, composed of table search processing and table rewrite processing, can be performed at a high speed even by the CPU of the IC card whose calculation capability is limited. At authentication time, the processing similar to the password generation processing at authentication time shown in FIG. 5 can be performed to generate an authentication password.

Even if the helper data 502 is leaked, the correct password and the original biometric information cannot be estimated easily. The master helper data should preferably be saved in the IC card 120 to prevent it from being output externally. Therefore, the system in this embodiment can ensure high security and achieve a privacy protection effect.

### [Second embodiment]

A second embodiment of the present invention will be described below using, as an example, a server/client type biometric authentication system that can perform biometric based challenge-response authentication when multiple networked service applications check the authenticity of a user via an authentication terminal device. In this embodiment, the public key infrastructure (PKI) and the biometric authentication technology are unified to allow the user to prove authenticity without performing the procedure, such as password registration, for the server in advance. In the standard PKI-based user authentication, the server verifies the authenticity of a user certificate (including public key), sent from a client, and uses a challenge-response mechanism to confirm that the client has the private key corresponding to the certificate. By doing so, the server can check the authenticity of the user without registering the authentication information (password, etc.) in advance. However, the server cannot check that the user who is the owner of the certificate is actually on the client. For example, if some other user uses an IC card in which the private key is stored, the server cannot check it. In contrast, in this embodiment, the server can not only verify the certificate and check the presence of the private key but also confirm the presence of the user and, in addition, can perform challenge-response type biometric authentication in which authentication information need not be registered in advance as in PKI.

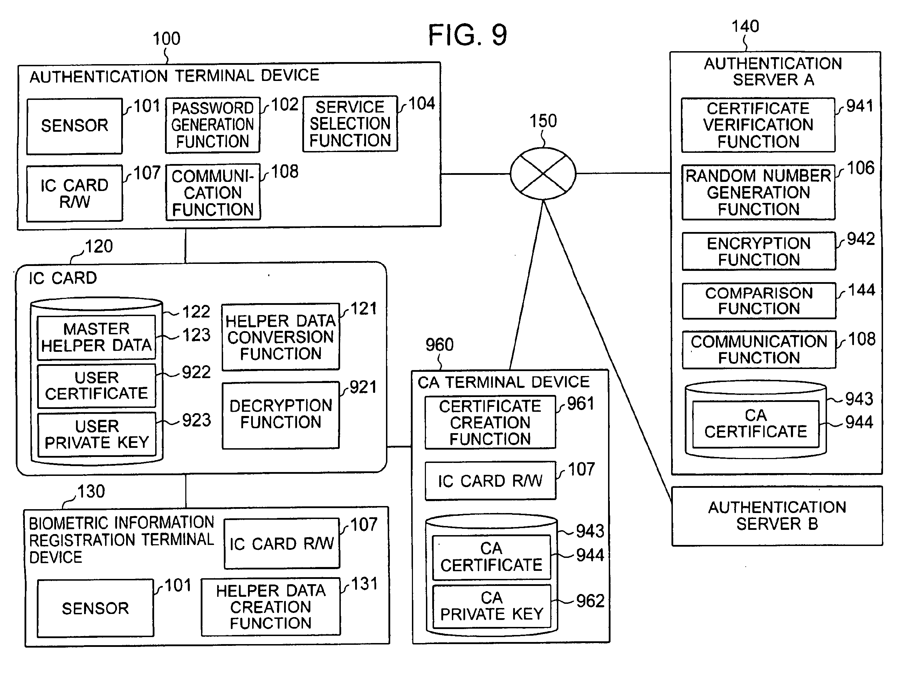

FIG. 9 is a diagram showing the configuration of a system in this embodiment. A biometric authentication system in this embodiment comprises an authentication terminal device 100 used by the user for authentication via a network, an IC card 120 issued to the user, a biometric information registration terminal device 130 used when master helper data is registered in the IC card, an authentication server 140 used by a service application to authenticate the user, a network 150, and a certificate authority (CA) 960 that issues a PKI certificate to a user. The authentication terminal device 100, which may be a user's PC, a mobile phone, or a PDA, is connected to the authentication server 140 via the network 150. The biometric information registration terminal device 130 is the same terminal device used in the first embodiment described above. The authentication server 140, which is managed by the service provider, receives an authentication request from the authentication terminal device 100, checks if the user on the authentication terminal is a legitimate user, and determines if a service is provided and if the user can register for the service. Not a service application but an individual can use the individual's PC or mobile terminal, instead of the authentication server 140, to check the authenticity of the user. Such a configuration allows networked person-to-person authentication, for example, P2P user authentication or network auction transaction, to be performed based on biometric authentication.

The authentication terminal device 100 comprises a sensor 101, a password generation function 102, a service selection function 104, an IC card R/W 107, and a communication function 108. The functions are the same as those in the first embodiment.

The IC card 120 comprises a helper data conversion function 121 that creates helper data, corresponding to a predetermined registration password, from the master helper data 123, a decryption function 921 that decrypts predetermined encrypted data using a user private key 923, and a storage device 122. The storage device 122 stores master helper data 123, a user certificate 922 (including public key), and the user private key 923. Instead of the IC card, a device having the data recording function and the data processing function, such as a USB memory and a portable terminal, can also be used. The user certificate 922, which conforms to the standard certificate format such as X509, includes not only the user public key but also the user name (or identifier), the address (or its hash value), and accounting information (or its hash value) that are information to be confirmed by an application server when services are provided to the user or the user is registered.

The configuration of the biometric information registration terminal device 130 is the same as that in the first embodiment described above.

The authentication server 140 comprises a certificate verification function 941 that verifies the authenticity of the user certificate 922, a random number generation function 106, an encryption function 942 that encrypts predetermined data with a predetermined public key, a password checking function 144, a communication function 108, and a storage device 943. The storage device 943 stores a CA certificate 944 that includes the public key of the certificate authority.

The CA terminal 960 comprises a certificate creation function 961 that creates a certificate with the signature assigned in response to request information from the user, an IC card R/W 107, and a storage device 943. The storage device 943 stores the CA certificate 944 and a CA private key 962.

Each of the authentication terminal device 100, biometric information registration terminal device 130, authentication server 140, and CA terminal device 960 can be implemented by a computer system shown in FIG. 8, such as a personal computer or a workstation, comprising a CPU 800, a memory 801, an HDD 802, an input device (keyboard, mouse, etc.) 803, an output device (display, printer, etc.) 804, and a communication device 805, as in the first embodiment.

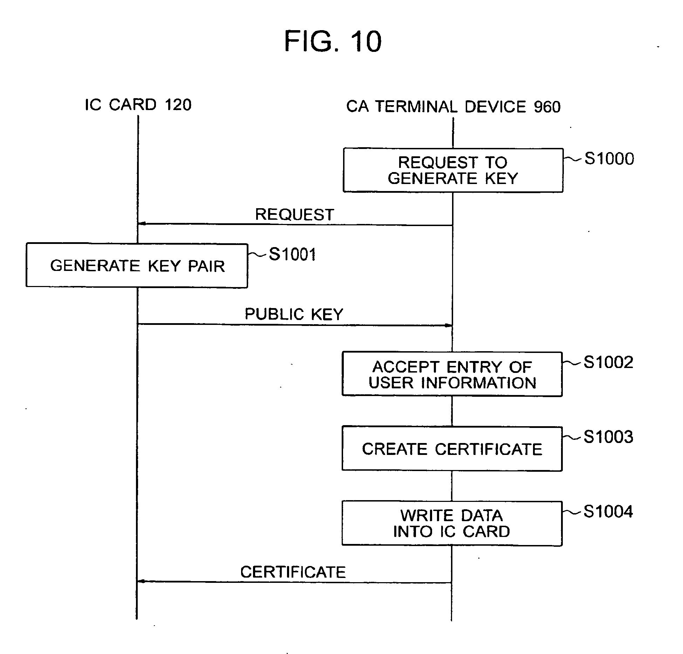

Next, the following describes the flow of processing performed when a certificate is issued in the embodiment with reference to FIG. 10.

This flow is started when the operator of the certificate authority or the user inserts the IC card 120 into the CA terminal device 960 after the operator identifies the user appropriately using the ID card.

First, the CA terminal device 960 sends a key generation request to the IC card 120 (Step S1000).

The IC card 120 receives the request and generates a pair of a public key and a private key. The IC card 120 stores the generated private key in the storage device 122 as the user private key 923 and sends the public key to the CA terminal device 960 (Step S1001).

The CA terminal device 960 receives the public key and accepts the entry of user information such as the user's name (or identifier), address (or its hash value), and accounting information (or its hash value) from the operator (Step S1002).

The certificate creation function 961 attaches the signature to the data, which is a pair of the user information and the public key, using the CA private key 962 to create the user certificate 922 (Step S1003).

The IC card R/W 107 of the CA terminal device 960 writes the user certificate 922 in the user' IC card 120 (Step S1004).

The processing performed when master helper data is registered is the same as that in the first embodiment. Note that the biometrics registration authority responsible for creating master helper data may be the certificate authority responsible for issuing the certificate, in which case the biometric information registration terminal device 130 and the CA terminal device 960 may be the same terminal device.

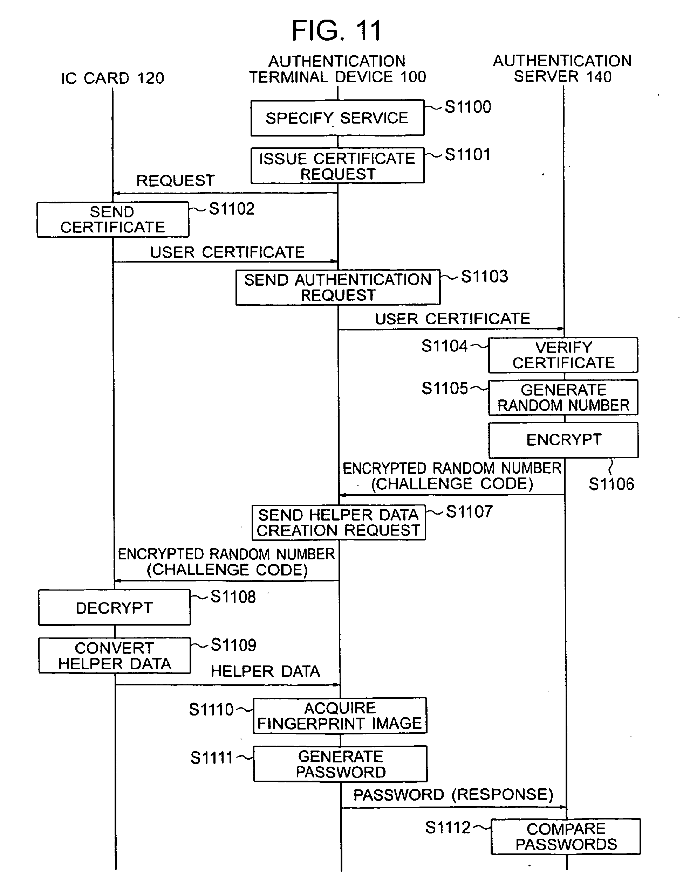

Next, the following describes the flow of processing performed at authentication time in this embodiment with reference to FIG. 11. This flow is started when the authentication terminal device 100 receives an access request to the server from the user. The access request is issued, for example, when the user uses services or when the user is registered for a service application.

First, the service selection function 104 of the authentication terminal device 100 checks the user's instruction to determine which service application the user is going to use (Step S1100).

Next, the authentication terminal device 100 requests the IC card 120 to send a user certificate (Step S1101).

In response to the request, the IC card 120 sends the user certificate 922 to the authentication terminal device 100 (Step S1102).

The authentication terminal device receives the user certificate 922 and sends an authentication request, as well as the user certificate 922, to the authentication server 140 of the service application determined in Step S1100 (Step S1103).

The authentication server 140 receives the user certificate 922, and the certificate verification function 941 verifies its authenticity based on the CA certificate 944 (Step S1104).

If the authenticity of the user certificate 922 is verified, the random number generation function 106 generates a random number code (Step S1105).

The encryption function 942 uses the public key, included in the user certificate 922, to encrypt the random number code and sends the encrypted code to the authentication terminal device 100 as a challenge code (Step S1106).

The authentication terminal device 100 receives the challenge code and sends a helper data creation request and the challenge code to the IC card 120 (Step S1107).

The IC card 120 receives the challenge code and decrypts the challenge code using the user private key 923 to obtain the original random number (Step S1108). This random number is used as the password in the subsequent processing.

The helper data conversion function 121 converts the master helper data 123 to create helper data corresponding to the password and sends the created helper data to the authentication terminal device 100 (Step S1109). The conversion processing of the helper data is the same as that in the first embodiment described above.

The authentication terminal device 100 receives the helper data and, after that, the sensor 101 acquires the user's fingerprint image (Step S1110).

The password generation function 102 generates an authentication password from the fingerprint image and the helper data and sends the generated password to the authentication server 140 (Step S1111). The authentication password generation processing is the same as that in the first embodiment. Note that, instead of the authentication password, the hash value or encrypted data of the authentication password may also be sent.

The authentication server 140 receives the authentication password and compares the received authentication password with the random number code, generated in Step S1105 and, if they match, determines that the authentication is successful and, if they do not match, determines that the authentication is unsuccessful (Step S1112). If the hash value or the encrypted data is received instead of the authentication password, the hash value or the encrypted data is created also for the random number code for use in comparison.

When the pair of the user private key 923 and the public key is regularly updated to enhance security, the CA operator need not identify the user using the ID card as described above; instead, as in the flow of the authentication processing described above, the CA terminal device 960 can authenticate the user to identify him or her. Therefore, when a certificate is updated, this method allows the user to update the certificate via the network without having to go to the certificate authority.

As described above, this embodiment, in which biometric authentication and PKI are combined, enables network-based biometric authentication without registering user authentication information, such as a password and biometric information, in the authentication server 140 in advance. "Mechanism-based PKI - A Real-time Key Generation from Fingerprints", by Yoichi Shibata, et al., IPSJ Journal Vol. 45 No. 8,2004 also proposes a technology which combines biometric authentication with PKI. However, because there is a one-to-one relation between private keys and helper data (a private key is generated from biometric information and helper data) according to the proposed technology, the helper data must be updated and, at the same time, the certificate must be re-issued when the pair of the private key and the public key is updated or when helper data must be updated as the fingerprint changes over time. This generates a convenience problem or an operation cost program. In contrast, this embodiment allows the user to create and update the private key and the master helper data independently and update only one of them as necessary. This ensures the user's convenience and reduces the cost required for creating helper data and issuing the certificate.

### [Third embodiment]

Next, a third embodiment of the present invention will be described using a service providing terminal device, such as an ATM, as an example wherein the terminal device uses an IC card and biometric information to authenticate a user. Conventionally, an in-card biometric comparison technology has been proposed for increasing security and privacy protection; according to this technology, user's registered biometric information is recorded in an IC card in advance and the user's biometric information acquired on the terminal device side at authentication time is sent to the IC card for comparison with the registered biometric information in the IC card to determine if the user is authentic. The problem with this technology is that, in most cases, the comparison processing of the biometric information requires the amount of calculation that is too large to attain sufficient authentication accuracy within a short processing time. This embodiment performs master helper data conversion and password comparison in an IC card to perform high-speed in-card biometric comparison processing.

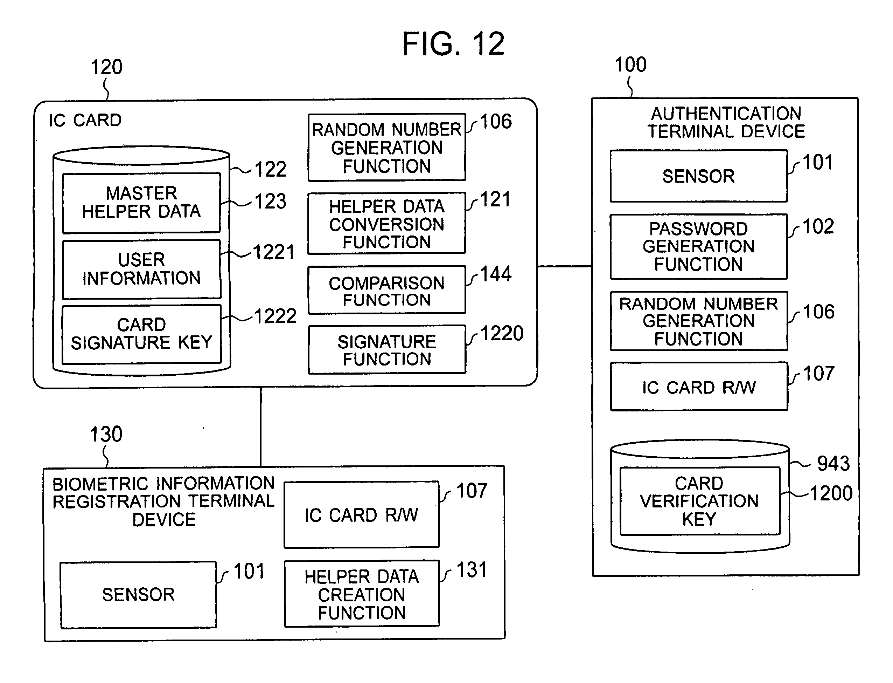

FIG. 12 is a diagram showing the configuration of a system in this embodiment. The biometric authentication system in this embodiment comprises an authentication terminal 100 that authenticates the user and provides the user with services, an IC card 120 issued to the user, and a biometric information registration terminal device 130.

The authentication terminal device 100 comprises a sensor 101, a password generation function 102, a random number generation function 106, an IC card R/W 107, and a storage device 943. The storage device 943 stores a card verification key 1200 used to verify data signed by the IC card 120.

The IC card 120 comprises a random number generation function 106, a helper data conversion function 121, a password comparison function 144, a signature function 1220, and a storage device 122. The storage device 122 stores user's master helper data 123, user information 1221, and a card signature key 1222. The user information 1221 includes information required by the authentication terminal device 100 to identify a user and provide services. This information may be the same as the user certificate 922 in the second embodiment described above. The card signature key 1222 may be the same as the card verification key 1200 or may be a private key created based on the public key cryptosystem technology. In the latter case, the card verification key 1200 must be a public key that is paired with the card signature key 1222.

Each of the authentication terminal device 100 and the biometric information registration terminal device 130 can be implemented by a computer system shown in FIG. 8, such as a personal computer or a workstation, comprising a CPU 800, a memory 801, an HDD 802, an input device (keyboard, mouse, etc.) 803, an output device (display, printer, etc.) 804, and a communication device 805, as in the first embodiment.

The configuration of the biometric information registration terminal device 130 is the same as that in the first embodiment described above.

The processing performed at master helper data registration time is the same as that in the first embodiment described above.

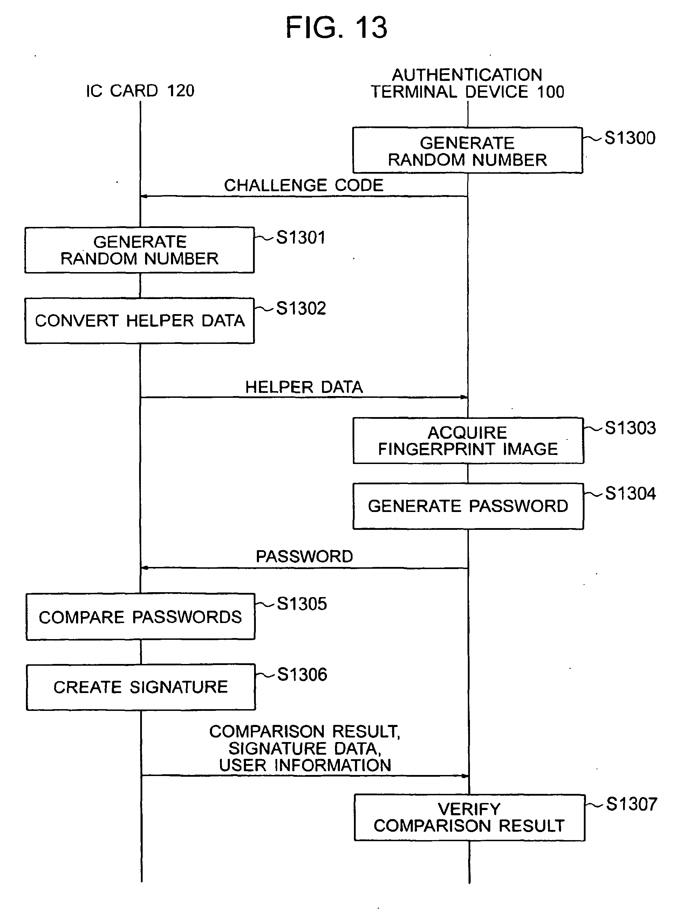

Next, with reference to FIG. 13, the following describes the flow of processing performed at authentication time in this embodiment. This processing flow is started when the user presents the IC card 120 to the authentication terminal device 100 to make a service request.

The random number generation function 106 of the authentication terminal device 100 generates a random number as a challenge code and sends it to the IC card 120 (Step S1300).

The IC card 120 receives the challenge code and, after that, generates a random number code by the random number generation function 106 of the IC card 120 (Step S1301).

The helper data conversion function 121 converts the master helper data 123 to create helper data, corresponding to the random number code, and sends the created helper data to the authentication terminal device 100 (Step S1302). The helper data conversion processing is the same as that in the first embodiment described above.

The authentication terminal device 100 receives the helper data and acquires the user's fingerprint image using the sensor 101 (Step S1303).

The password generation function 102 generates an authentication password from the fingerprint image and the helper data and sends the generated password to the IC card 120 (Step S1304). The authentication password generation processing is the same as that in the first embodiment described above. Instead of the authentication password, the hash value or the encrypted data of the authentication password may also be used.

The IC card 120 receives the authentication password, and the comparison function 144 compares the authentication password with the random number code (Step S1305). If the hash value or the encrypted data is received instead of the authentication password, the hash value or the encrypted data is created also for the random number code for use in comparison.

The signature function 1220 creates a digital signature for data, created by concatenating the comparison result data (1-bit value indicating "match" or "mismatch") to the challenge code, using the card signature key 1222 to send the comparison result data, the digital signature data, and the user information 1221 to the authentication terminal device 100 (Step S1306).

The authentication terminal device 100 receives the comparison result data, the digital signature data, and the user information 1221, verifies the digital signature data using the card verification key 1200, and confirms the authenticity of the comparison result data (Step S1307). If the comparison result data is legitimate and the comparison result is "match", it is determined that the authentication is successful and the service is provided.

The biometric authentication system in this embodiment is thought of as one type of in-card biometric comparison, because comparison processing can be performed in the card without sending the master helper data 123 to a device outside the IC card 120. The conventional in-card comparison processing requires the amount of calculation that is too large to attain sufficient authentication accuracy within a short processing time. In contrast, the in-card comparison processing in this embodiment, which is composed only of helper data conversion and password comparison, does not require a large amount of calculation. This configuration enables high-speed, in-card biometric comparison.

The present invention is applicable to any application that performs user authentication. In particular, the present invention increases convenience and reduces the operation cost in networked authentication. For example, the present invention is applicable to information access control in a corporate network, user identification in an Internet banking system or an ATM, a login to a membership website, personal authentication required to enter a protected area, and a login to a personal computer.

It should be further understood by those skilled in the art that although the foregoing description has been made on embodiments of the invention, the invention is not limited thereto and various changes and modifications may be made without departing from the scope of the appended claims.

## Claims

1. A biometric authentication system comprising:
a helper data generating device (120) for generating helper data (502) used to generate an authentication password based on a user's biometric information;
a password generating device (100) for generating the authentication password using the helper data (502); and
a comparison device (140) for comparing the authentication password with a registration password registered in advance in said comparison device (140),
wherein said comparison device (140) comprises:
a module (106) for generating a random number code; and
a module (108) for sending the generated random number code to said helper data generating device (120),
said helper data generating device (120) comprises:
a module for receiving the random number code;
a module (122) for storing master helper data (123) created in advance based on the user's biometric information;
a module (121) for converting the master helper data (123) to generate helper data (502) corresponding to the random number code; and
a module for sending the helper data (502) to said password generating device (100),
said password generating device (100) comprises:
a module (108) for receiving the helper data (502);
a module (101) for acquiring the user's biometric information;
a module (102) for generating the authentication password from the acquired biometric information and the helper data (502); and
a module (108) for sending the authentication password to said comparison device (140), and
said comparison device (140) comprises:
a module (108) for receiving the authentication password; and
a module (144) for comparing the authentication password with the random number code to determine if the user is authentic,
wherein when the user makes use of a plurality of services each necessitating his authentication, the module (121) for converting the master helper data in the helper data generating device (120) is adapted to create helper data (502) for each of the services by converting the unitary master helper data based on a random number code provided for each of the services.

2. The system according to claim 1,
wherein the master helper data (123) has a value for each distribution interval of the user's biometric information, and
the module (121) for converting the master helper data in the helper data generating device (120) is adapted to assign a partial value of the random number code to a distribution interval of the user's biometric information whose master helper data (123) value corresponds to a first value, to assign other values to the distribution intervals of the user's biometric information whose master helper data (123) value corresponds to a second value, and to combine the assigned values to generate the helper data (502).

3. The system according to claim 2,
wherein a value corresponding to a frequency-concentrated distribution interval of the user's biometric information in the master helper data (123) is the first value, and
a value corresponding to the distribution intervals of the user's biometric information in the master helper data (123) other than the frequency-concentrated distribution interval of the user's biometric information is the second value.

4. The system according to claim 1,
wherein the helper data generating device (120) further comprises a communication module (108) adapted to receives the user's biometric information from an external device, and to send the helper data (502) but
not the master helper data (123) from said helper data generating device (120) to an external device.

5. The system according to claim 1, wherein said helper data generating device is an IC card (120), a portable memory, or a portable terminal device (130).

6. The system according to claim 1, wherein said master helper data (123) is common to a plurality of authentication servers (140).

7. The system of claim according to claim 2 or 3, wherein the password generating device (100) further comprises a random number generation module (106) for generating random numbers for use as the other values.

8. The biometric authentication system according to any one of the preceding claims,
wherein said comparison device (140) further comprises:
a module (942) for encrypting the random number code to create an encrypted code; and
a module (108) for sending the encrypted code to said helper data generating device (120), and
said helper data generating device (120) further comprises:
a module for receiving the encrypted code; and
a module (921) for decrypting the encrypted code to obtain the random number code.

9. The biometric authentication system according to any one of claims 1 to 7, wherein said comparison device (140) and said helper data generating device (120) are included in one system.

## Patentansprüche

1. Biometrisches Authentifizierungssystem, umfassend:
eine Helferdaten-Erzeugungsvorrichtung (120) zum Erzeugen von Helferdaten (502), die zum Erzeugen eines Authentifizierungspassworts auf der Grundlage von biometrischen Informationen eines Benutzers verwendet werden,
eine Passwort-Erzeugungsvorrichtung (100) zum Erzeugen des Authentifizierungspassworts unter Verwendung der Helferdaten (502) und
eine Vergleichsvorrichtung (140) zum Vergleichen des Authentifizierungspassworts mit einem Registrierungspasswort, das im Voraus in der Vergleichsvorrichtung (140) registriert worden ist,
wobei die Vergleichsvorrichtung (140) umfasst:
ein Modul (106) zum Erzeugen eines Zufallszahlencodes und
ein Modul (108) zum Senden des erzeugten Zufallszahlencodes an die Helferdaten-Erzeugungsvorrichtung (120),
wobei die Helferdaten-Erzeugungsvorrichtung (120) umfasst:
ein Modul zum Empfangen des Zufallszahlencodes;
ein Modul (122) zum Speichern von Masterhelferdaten (123), die im Voraus auf der Grundlage der biometrischen Information des Benutzers erschaffen worden sind;
ein Modul (121) zum Umwandeln der Masterhelferdaten (123) zum Erzeugen von dem Zufallszahlencode entsprechenden Helferdaten (502) und
ein Modul zum Senden der Helferdaten (502) an die Passwort-Erzeugungsvorrichtung (100),
wobei die Passwort-Erzeugungsvorrichtung (100) umfasst:
ein Modul (108) zum Empfangen der Helferdaten (502),
ein Modul (101) zum Erfassen der biometrischen Informationen des Benutzers,
ein Modul (102) zum Erzeugen des Authentifizierungspassworts aus den erfassten biometrischen Informationen und den Helferdaten (502) und
ein Modul (108) zum Senden des Authentifizierungspassworts an die Vergleichsvorrichtung (140), und
wobei die Vergleichsvorrichtung (140) umfasst:
ein Modul (108) zum Empfangen des Authentifizierungspassworts und
ein Modul (144) zum Vergleichen des Authentifizierungspassworts mit dem Zufallszahlencode, um zu bestimmen, ob der Benutzer authentisch ist,
wobei das Modul (121) zum Umwandeln der Masterhelferdaten in der Helferdaten-Erzeugungsvorrichtung (120), wenn der Benutzer mehrere Dienste verwendet, die jeweils seine Authentifizierung verlangen, dazu ausgelegt ist, Helferdaten (502) für jeden der Dienste durch Umwandeln der einheitlichen Masterhelferdaten auf der Grundlage eines für jeden der Dienste bereitgestellten Zufallszahlencodes zu erschaffen.

2. System nach Anspruch 1,
wobei die Masterhelferdaten (123) einen Wert für jedes Verteilungsintervall der biometrischen Informationen des Benutzers aufweisen und
das Modul (121) zum Umwandeln der Masterhelferdaten in der Helferdaten-Erzeugungsvorrichtung (120) dazu ausgelegt ist, einen Teilwert des Zufallszahlencodes einem Verteilungsintervall der biometrischen Informationen des Benutzers zuzuschreiben, dessen Wert der Masterhelferdaten (123) einem ersten Wert entspricht, andere Werte den Verteilungsintervallen der biometrischen Informationen des Benutzers zuzuschreiben, deren Wert der Masterhelferdaten (123) einem zweiten Wert entspricht, und die zugeschriebenen Werte zu kombinieren, um die Helferdaten (502) zu erzeugen.

3. System nach Anspruch 2,
wobei ein Wert, der einem frequenzkonzentriertem Verteilungsintervall der biometrischen Informationen des Benutzers in den Masterhelferdaten (123) entspricht, der erste Wert ist und
ein Wert, der den Verteilungsintervallen der biometrischen Informationen des Benutzers in den Masterhelferdaten (123), die vom frequenzkonzentriertem Verteilungsintervall der biometrischen Informationen des Benutzers verschieden sind, entspricht, der zweite Wert ist.

4. System nach Anspruch 1,
wobei die Helferdaten-Erzeugungsvorrichtung (120) ferner ein Kommunikationsmodul (108) umfasst, das dazu ausgelegt ist, die biometrischen Informationen des Benutzers von einer externen Vorrichtung zu empfangen und die Helferdaten (502) aber nicht die Masterhelferdaten (123) von der Helferdaten-Erzeugungsvorrichtung (120) an eine externe Vorrichtung zu senden.

5. System nach Anspruch 1, wobei die Helferdaten-Erzeugungsvorrichtung eine IC-Karte (120), ein tragbarer Speicher oder eine tragbare Terminalvorrichtung (130) ist.

6. System nach Anspruch 1, wobei die Masterhelferdaten (123) mehreren Authentifizierungsservern (140) gemein sind.

7. System nach Anspruch 2 oder 3, wobei die Passwort-Erzeugungsvorrichtung (100) ferner ein Zufallszahlen-Erzeugungsmodul (106) zum Erzeugen von Zufallszahlen zur Verwendung als die anderen Werte umfasst.

8. Biometrisches Authentifizierungssystem nach einem der vorhergehenden Ansprüche,
wobei die Vergleichsvorrichtung (140) ferner umfasst:
ein Modul (142) zum Verschlüsseln des Zufallszahlencodes, um einen verschlüsselten Code zu erschaffen, und
ein Modul (108) zum Senden des verschlüsselten Codes an die Helferdaten-Erzeugungsvorrichtung (120) und
wobei die Helferdaten-Erzeugungsvorrichtung (120) ferner umfasst:
ein Modul zum Empfangen der verschlüsselten Codes und
ein Modul (921) zum Entschlüsseln des verschlüsselten Codes, um den Zufallszahlencode zu erhalten.

9. Biometrisches Authentifizierungssystem nach einem der Ansprüche 1 bis 7, wobei die Vergleichsvorrichtung (140) und die Helferdaten-Erzeugungsvorrichtung (120) in einem System enthalten sind.

## Revendications

1. Système d'authentification biométrique comportant :
un dispositif de génération de données d'assistance (120) pour générer des données d'assistance (502) utilisées pour générer un mot de passe d'authentification basé sur des informations biométriques d'un utilisateur,
un dispositif de génération de mot de passe (100) pour générer le mot de passe d'authentification en utilisant les données d'assistance (502), et
un dispositif de comparaison (140) pour comparer le mot de passe d'authentification à un mot de passe d'enregistrement enregistré à l'avance dans ledit dispositif de comparaison (140),
dans lequel ledit dispositif de comparaison (140) comporte :
un module (106) pour générer un code de nombre aléatoire, et
un module (108) pour envoyer le code de nombre aléatoire générer audit dispositif de génération de données d'assistance (120),
ledit dispositif de génération de données d'assistance (120) comporte :
un module pour recevoir le code de nombre aléatoire,
un module (122) pour mémoriser des données d'assistance principales (123) créées à l'avance sur la base des informations biométriques d'un utilisateur,
un module (121) pour mémoriser les données d'assistance principales (123) afin de générer des données d'assistance (502) correspondant au code de nombre aléatoire, et
un module pour envoyer les données d'assistance (502) audit dispositif de génération de mot de passe (100),
ledit dispositif de génération de mot de passe (100) comporte :
un module (108) pour recevoir les données d'assistance (502),
un module (101) pour acquérir les informations biométriques d'un utilisateur,
un module (102) pour générer le mot de passe d'authentification à partir des informations biométriques acquises et des données d'assistance (502), et
un module (108) pour envoyer le mot de passe d'authentification audit dispositif de comparaison (140), et
ledit dispositif de comparaison (140) comporte :
un module (108) pour recevoir le mot de passe d'authentification,
un module (144) pour comparer le mot de passe d'authentification au code de nombre aléatoire afin de déterminer si l'utilisateur est authentique,
dans lequel lorsque l'utilisateur utilise une pluralité de services dont chacun nécessite son authentification, le module (121) pour convertir les données d'assistance principales dans le dispositif de génération de données d'assistance (120) est adapté pour créer des données d'assistance (502) pour chacun des services en convertissant les données d'assistance principales unitaires sur la base d'un code de nombre aléatoire fourni pour chacun des services.

2. Système selon la revendication 1,
dans lequel les données d'assistance principales (123) ont une valeur pour chaque intervalle de distribution des informations biométriques d'un utilisateur, et
le module (121) pour convertir les données d'assistance principales dans le dispositif de génération de données d'assistance (120) est adapté pour attribuer une valeur partielle du code de nombre aléatoire à un intervalle de distribution des informations biométriques d'un utilisateur dont la valeur des données d'assistance principales (123) correspond à une première valeur, pour attribuer d'autres valeurs aux intervalles de distribution des informations biométriques d'un utilisateur dont la valeur des données d'assistance principales (123) correspond à une seconde valeur, et pour combiner les valeurs attribuées afin de générer les données d'assistance (502).

3. Système selon la revendication 2,
dans lequel une valeur correspondant à un intervalle de distribution concentré en fréquence des informations biométriques d'un utilisateur dans les données d'assistance principales (123) est la première valeur, et
une valeur correspondant aux intervalles de distribution des informations biométriques d'un utilisateur dans les données d'assistance principales (123) autres que l'intervalle de distribution concentré en fréquence des informations biométriques d'un utilisateur est la seconde valeur.

4. Système selon la revendication 1,
dans lequel le dispositif de génération de données d'assistance (120) comporte en outre un module de communication (108) adapté pour recevoir les informations biométriques d'un utilisateur en provenance d'un dispositif externe, et pour envoyer les données d'assistance (502) mais pas les données d'assistance principales (123) depuis ledit dispositif de génération de données d'assistance (101) à un dispositif externe.

5. Système selon la revendication 1, dans lequel ledit dispositif de génération de données d'assistance est une carte IC (120), une mémoire portable, ou un terminal portable (130).

6. Système selon la revendication 1, dans lequel lesdites données d'assistance principales (123) sont communes à une pluralité de serveurs d'authentification (140).

7. Système selon la revendication 2 ou 3, dans lequel le dispositif de génération de mot de passe (100) comporte en outre un module de génération de nombres aléatoires (106) pour générer des nombres aléatoires en vue d'une utilisation en tant qu'autres valeurs.

8. Système d'authentification biométrique selon l'une quelconque des revendications précédentes,
dans lequel ledit dispositif de comparaison (140) comporte en outre :
un module (942) pour crypter le code de nombre aléatoire afin de créer un code crypté, et
un module (108) pour envoyer le code crypté audit dispositif de génération de données d'assistance (120), et
ledit dispositif de génération de données d'assistance (120) comporte en outre :
un module pour recevoir le code crypté, et
un module (921) pour décrypter le code crypté afin d'obtenir le code de nombre aléatoire.

9. Système d'authentification biométrique selon l'une quelconque des revendications 1 à 7, dans lequel ledit dispositif de comparaison (140) et ledit dispositif de génération de données d'assistance (120) sont inclus dans un même système.
